# EUROPÄISCHE PATENTANMELDUNG

(11) **EP 1 119 215 A1**
(43) Veröffentlichungstag der Anmeldung: **25.07.2001**
(21) Anmeldenummer: 00101181.6
(22) Anmeldetag: 21.01.2000
(51) Int. Cl.: H04Q 11/04

(54) **Vorrichtung zum optimierten Bearbeiten von Informationen bei einer paketorientierten Übertragung**

(71) Anmelder: SIEMENS AKTIENGESELLSCHAFT, 80333 München (DE)
(72) Erfinder: von Sichart, Frithjof, Dr. rer. nat., 80803 München (DE)

(57) **Zusammenfassung**

Beim Stand der Technik werden zum Bearbeiten von Auftragsschlangen in der Regel eine Mehrzahl von FIFO-Register verwendet. Damit ist das Problem verbunden, daß diese Mehrzahl von FIFO-Register einen nicht unbeträchtlichen Mehraufwand darstellt. Die Erfindung löst dieses Problem, indem die Mehrzahl von FIFO-Register in einem FIFO-Register zusammengefaßt wird.

## Beschreibung

Vorrichtung zum optimierten Bearbeiten von Informationen bei einer paketorientierten Übertragung.

Die Erfindung betrifft eine Vorrichtung gemäß dem Oberbegriff von Patentanspruch 1.

Beim Stand der Technik weist jede Verarbeitungseinheit mehrere FIFO-Register auf. Eine Verarbeitungseinheit kann beispielsweise ein Router sein, der zwischen einem sendenden und einem empfangenden Teilnehmer angeordnet ist. Neben den FIFO-Registern sind in der Regel Prozessoren mit Speichermittel angeordnet. Weiterhin ist eingangsseitig eine Steuereinrichtung (Forwarding) vorgesehen, die die ankommenden Datenpakete daraufhin überprüft, ob sie zum empfangenen Teilnehmer weitergeleitet werden sollen oder als Steuerdatenpakete des Routers anzusehen sind.

Ist letzterer Fall gegeben, so werden die Steuerdatenpakete in die Speichermittel eingeschrieben und vom zugeordneten Prozessor bearbeitet. Dabei ergibt sich aber das Problem, daß die Mehrzahl von FIFO-Register vom Prozessor zusätzlich zu seinen Aufgaben der Bearbeitung der Steuerdatenpakete verwaltet werden müssen, was einen nicht unbeträchtlichen Mehraufwand darstellt.

Der Erfindung liegt die Aufgabe zugrunde, einen Weg aufzuzeigen, wie mit einfachen Mitteln der Aufwand der Bearbeitung von Datenpaketen reduziert werden kann.

Die Erfindung wird ausgehend von den im Oberbegriff von Patentanspruch 1 abgelegten Merkmalen durch die Merkmale des kennzeichnenden Teils gelöst.

Vorteilhaft an der Erfindung ist insbesondere das Vorsehen lediglich einer FIFO-Speichereinrichtung, die jeweils durch einen Schreib-/Lesepointer in zwei logische Hälften aufteilbar ist. Im ersten Teil werden die Anfangsadressen des freien (reservierten) Speicherplatzes abgelegt, während im zweiten logischen Teil die Anfangsadressen des verbrauchten Speicherplatzes abgelegt sind.

Damit ist der Vorteil verbunden, daß der Aufwand bei der Integration zweier FIFO-Register zu einem sich auf die Hälfte vermindert, bei der Intergration dreier FIFO-Register zu einem drittelt usw. Hierdurch wird bei der Verwendung eines ASIC-Bausteines die Chipfläche verkleinert, die Ausbeute vergrößert und die Zuverlässigleit erhöht. Bei der Verwendung eines Gate Array-Bausteines oder FPGA-Bausteines wird im allgemeinen ein kleinerer Master ausreichend sein. Zumindest wird die Verdrahtbarkeit erleichert und Synthesezeit sowie Dynamik verbessert. Alle Maßnahmen haben eine signifikante Kostenreduzierung zur Folge.

Vorteilhafte Weiterbildungen sind in den Unteransprüchen angegeben.

Die Erfindung wird im folgenden anhand eines figürlich dargestellten Ausführungsbeispieles näher erläutert.

Es zeigen:
- FIG 1: eine Vorrichtung gemäß dem Stand der Technik
- FIG 2: die erfindungsgemäße Vorrichtung

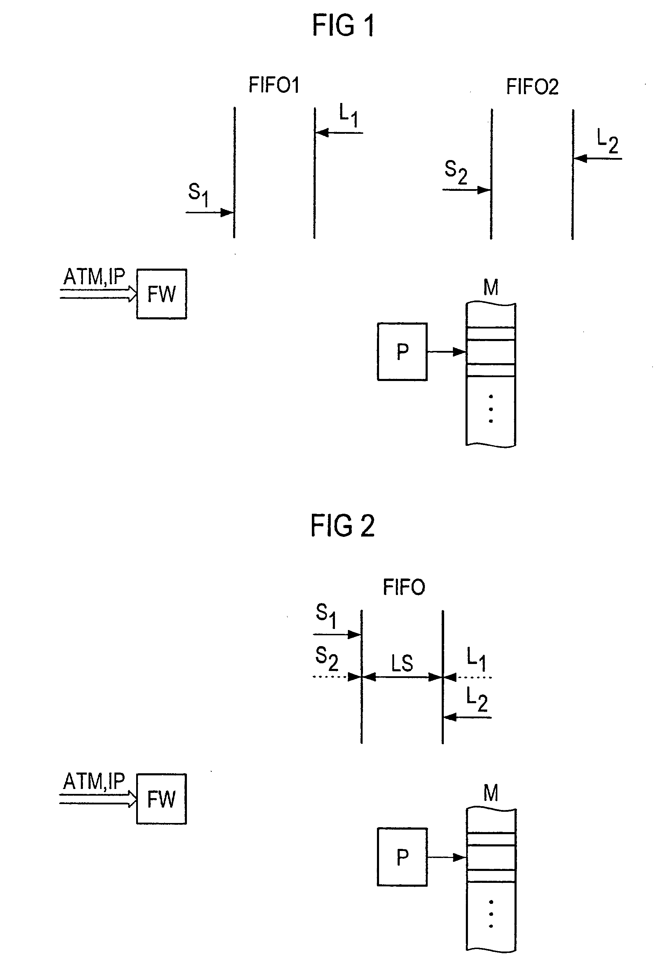

In Fig. 1 sind die Verhältnisse des Standes der Technik nochmals aufgezeigt. Demgemäß werden in einer als Router ausgebildten Verarbeitungseinheit eintreffende Datenpakete ATM, IP einer eingangsseitig angeordneten Steuereinrichtung FW (Forwarding) zugeführt. Bei den Datenpaketen soll es sich um ATM-Zellen ATM oder vorzugsweise um Internet-Datenpakete IP handeln. Ein im Router angeordneter Prozessor P hat unmittelbar vor dem Eintreffen der Datenpakete IP in einem fest zugeordneten Speicher M hierzu Speicherplatz für die zu erwartenden Datenpakete IP reserviert. Die Anfangsadressen dieses reservierten (noch) freien Speicherplatzes werden vom Prozessor P über einen Schreibpointer S₁ in ein erstes FIFO-Register FIFO₁ eingetragen.

Von der Steuereinrichtung FW werden die eintreffenden Datenpakete IP aufgenommen und, falls sie als Steuerdatenpakete identifiziert worden sind, unter Zuhilfenahme der im ersten FIFO-Register FIFO₁ abgelegten Anfangsadressen in den Speicher M des Prozessors P eingetragen. Damit ist der Speicherplatz nicht mehr frei und steht demgemäß keinen weiteren Datenpaketen IP zur Verfügung. Zur Registrierung werden die Anfangsadresse, unter der das in Frage kommende Datenpaket IP abgelegt ist unter Zuhilfenahme eines zweiten Schreibpointers S₂ in ein zweites FIFO-Register FIFO₂ eingetragen.

Es ergibt sich somit eine logische Aufteilung der beiden FIFO-Register. Während im ersten FIFO-Register FIFO₁ die vom Prozessor P reservierten Anfangsadressen abgelegt sind, also die Adressen, die eintreffenden Datenpaketen voll zur Verfügung stehen, sind im zweiten FIFO-Register FIFO₂ die Anfangsadressen abgelegt, unter der die Datenpakete IP gespeichert sind und somit dieser Speicherplatz weiteren eintreffenden Datenpaketen IP nicht mehr zur Verfügung stehen kann.

Vom Prozessor P werden nun die im Speicher M abgelegten Datenpakete IP unter Zuhilfenahme eines Lesepointers L₂ ausgelesen und bearbeitet. Ist der Bearbeitungsprozess der gespeicherten Datenpakete abgeschlossen, wird der freigewordene Speicherplatz im Speicher M dem FIFO-Register FIFO₁ mit Hilfe des Schreibpointers S₁ mitgeteilt.

Erfindungsgemäß wird nun vorgesehen, die beiden FIFO-Register FIFO₁, FIFO₂ zu einem FIFO-Register FIFO zusammenzufassen.Die entsprechenden Verhältnisse sind in Fig. 2 wiedergegeben. Die beiden Pointer L₁, S₂ werden hierbei zu einem Pointer LS zusammengefaßt. Die logische Trennung im FIFO-Register wird somit durch den Pointer LS vorgenommen.

Vor dem Eintreffen der Datenpakete IP wird somit vom Prozessor P im Speicher M Speicherplatz reserviert. Die Anfangsadressen des reservierten Speicherplatzes wird vom Prozessor P mit seiner eigenen Taktfrequenz in den oberen Bereich des FIFO-Speichers FIFO unter Ansteuerung des Schreibpointers S₁ eingeschrieben. Die eintreffenden Datenpakete IP werden von der eingangsseitig angeordneten Steuereinrichtung FW aufgenommen. Ferner wird von der Steuereinrichtung FW der Pointer LS angesteuert und die im oberen Bereich des FIFO-Speichers FIFO abgelegten Anfangsadressen ausgelesen. Unter diesen Adressen werden dann die Datenpakete IP im Speicher M abgelegt.

Zeitgleich hierzu werden mit Hilfe des Pointer LS von der eingangsseitig angeordneten Steuereinrichtung FW im unteren Bereich des FIFO-Speicher FIFO die Anfangsadressen der Datenpakete IP abgelegt, unter der diese im Speicher M gespeichert sind. Die Ansteuerung des Pointers LS erfolgt mit der Taktfrequenz der Steuereinrichtung FW. Vom Prozessor P werden nun diese Anfangsadressen unter Zuhilfenahme des Lesepointers L₂ dem FIFO-Speicher FIFO entnommen. Die Ansteuerung des Lesepointers L₂ erfolgt mit der Taktfrequenz des Prozessors P. Die im Speicher M abgelegten Datenpakete IP werden nun ausgelesen und bearbeitet. Ist der Bearbeitungsprozess der im Speicher M gespeicherten Datenpakete abgeschlossen, wird der freigewordene Speicherplatz des Speichers M dem FIFO-Register FIFO mit Hilfe des Schreibpointers S₁ mitgeteilt.

Die Dimensionierung des FIFO-Speichers FIFO erfolgt derart, daß er der größtmöglichen Anzahl von Datenpaketen entspricht.

## Patentansprüche

1. Vorrichtung zum Bearbeiten von Datenpaketen (ATM, IP), mit wenigstens zwei Speichereinrichtungen (FIFO₁, FIFO₂), die jeweils einen Schreib- und Lesezähler (S₁, L₁;S₂, L₂) aufweisen, die von wenigstens einer Steuereinrichtung (P, FW) gesteuert werden, wobei eine der Steuereinrichtungen (P) einer weiteren Speichervorrichtung (M) zugeordnet ist, die der Aufnahme von Datenpaketen dienlich ist (ATM, IP),
**dadurch gekennzeichnet,**
daß die wenigstens zwei Speichereinrichtungen (FIFO₁, FIFO₂) zu einer gemeinsamen Speichereinrichtung (FIFO) zusammengefaßt sind, die durch das Vorsehen wenigstens eines Pointers (LS) in wenigstens zwei logische Hälften aufteilbar ist.

2. Vorrichtung nach Anspruch 1,
**dadurch gekennzeichnet,**
daß die gemeinsame Speichereinrichtung (FIFO) als FIFO-Register ausgebildet ist, in dessen einer logischen Hälfte die Anfangsadressen der in der weiteren Speichervorrichtung (M) zu speichernden Datenpakete (ATM, IP) und in der verbleibenden wenigstens einen logischen Hälfte die Anfangsadressen der in der weiteren Speichervorrichtung (M) bereits gespeicherten Datenpakete (ATM, IP) abgelegt sind.

3. Vorrichtung nach Anspruch 1, 2,
**dadurch gekennzeichnet,**
daß der Pointer (LS) durch Zusammenlegen eines der Schreibzähler (S₂) und eines der Lesezähler (L₁) gebildet wird.

4. Vorrichtung nach Anspruch 1 bis 3,
**dadurch gekennzeichnet**,
daß eine der Steuereinrichtungen (P) als Zentralprozessor ausgebildet ist.

5. Vorrichtung nach nach Anspruch 1 bis 3,
**dadurch gekennzeichnet**,
daß die verbleibende Steuereinrichtung (FW) darüber entscheidet, ob die eintreffenden Datenpakete (ATM, IP) als Steuerdatenpakete anzusehen sind.
